# EUROPÄISCHE PATENTSCHRIFT

(11) **EP 2 671 007 B1**
(45) Veröffentlichungstag und Bekanntmachung des Hinweises auf die Patenterteilung: **12.04.2017**
(21) Anmeldenummer: 11703141.9
(22) Anmeldetag: 01.02.2011
(51) Int. Cl.: F16K 11/07, F16K 27/04

(54) **Verfahren zur Erhöhung der hydraulischen oder pneumatischen Belastbarkeit eines Bauteilgehäuses**
A method for increasing the hydraulic or pneumatic durability of a component housing
Procédé pour augmenter la résistance hydraulique ou pneumatique d'un boîtier

(43) Veröffentlichungstag der Anmeldung: 11.12.2013
(73) Patentinhaber: Robert Bosch GmbH, 70469 Stuttgart (DE)
(72) Erfinder: STRAUSS, Klemens, 97833 Frammersbach (DE); WEIS, Frank, 97737 Gemünden am Main (DE); WALTHER, Martin, 63801 Kleinostheim (DE)
(74) Vertreter: Wiesmann, Stephan
(86) Internationale Anmeldenummer: PCT/EP2011/000458
(87) Internationale Veröffentlichungsnummer: WO 2012/103899

(56) Entgegenhaltungen:
- EP-A1- 0 624 732
- EP-A2- 1 304 476
- DE-A1- 2 158 325
- DE-A1- 19 527 892
- JP-A- 2001 248 479

## Beschreibung

Die vorliegende Erfindung betrifft ein Verfahren zur Erhöhung der hydraulischen oder pneumatischen Belastbarkeit eines Bauteilgehäuses gemäß dem Oberbegriff des Patentanspruchs 1.

In Gehäusen von unter hydraulischem/pneumatischem Druck stehenden Bauteilen, wie beispielsweise Ventilen, sind in der Regel Druckkanäle ausgeformt, die über Schließkörper geöffnet und geschlossen werden können. Hierfür sind die Schließkörper in Schließkörperkammern (Ventilbohrungen) verschiebbar untergebracht, in die die Druckkanäle einmünden. Die Einmündstellen bilden im Betrieb des Bauteils Bereiche hoher Materialspannung im Gehäuse und stellen daher grundsätzliche Gefahrenstellen für einen Materialbruch dar.

Aus dem Stand der Technik ist es daher bekannt, die Einmündstelle eines Druckkanals beispielsweise in die Ventilkolbenkammer (Ventilbohrung) eines Schieberventils derart auszubilden, indem innerhalb der Ventilkolbenkammer im Wirkungsbereich einer Steuerkante des Ventilkolbens eine Umfangsnut im Gehäuse ausgearbeitet ist, die mit einem Fluidkanal verbunden ist. Die Umfangsnut ist dabei jedoch nicht winklig ausgeformt sondern "verrundet". D.h., dass die Umfangsnut in ihrem Querschnitt (quer zur Umfangsrichtung) eine Halbkreisform annimmt vorzugsweise mit einem Radius = ½ Kanalbreite, sowie im Querschnitt einen konstanten Radius über den gesamten Umfang hat. Durch diese Maßnahme lässt sich eine Kerbwirkung im Bereich der Umfangsnut reduzieren und damit die Belastbarkeit des Bauteilgehäuses insgesamt erhöhen.

In den Druckschriften DE 195 27 892 A2, EP 0 624 732 A1, DE 21 58 325 A1, EP 1 304 476 A2 und JP2001 248479 A sind jeweils Gehäuse von Ventilen bekannt, bei denen Ventilbohrungen mit asymmentrischen Umfangsnuten ausgeführt sind.

An dieser Stelle soll indessen darauf hingewiesen werden, dass Gehäuse seriengefertigter Hydraulikbauteile in der Regel als ein Gusskörper, hergestellt aus einem Grauguss oder einer Aluminiumlegierung ausgebildet sind, wobei die hierfür verwendeten Materialien unterschiedliche Belastungseigenschaften aufweisen. Häufig ist die Druckfestigkeit und damit die Druckschwellfestigkeit materialbedingt erheblich höher als die Zugfestigkeit und folglich die Zugschwellfestigkeit. Detaillierte Versuche der Anmelderin dieser Erfindung haben ergeben, dass in Gehäusen vorstehend beschriebener Gattung im Bereich der Umfangsnuten im Betrieb sowohl Zug- als Druckbelastungen gleichzeitig an unterschiedlichen Stellen im Gehäusematerial auftreten, wobei die Maximalbelastung des Gehäuses in Abhängigkeit des verwendeten Materials im zugbelasteten Bereich viel schneller an ihre Grenze stößt als im druckbelasteten Bereich.

Der Erfindung liegt angesichts dieser technischen Erkenntnisse die Aufgabe zugrunde, ein Verfahren zur Herstellung eines hydraulisch oder pneumatisch druckbelasteten Bauteilgehäuses zu bereitstellen, wobei die allgemeine hydraulische oder pneumatische Druckfestigkeit des Bauteilgehäuses ohne Vergrößerung seiner Außenmaße bzw. Gehäusewandstärken erhöht werden kann.

Diese Aufgabe wird durch ein Verfahren mit den Verfahrensschritten des Anspruchs 1 gelöst. Weitere vorteilhafte Ausgestaltungen der Erfindung sind Gegenstand der Unteransprüche.

Das Wesen der Erfindung besteht demzufolge darin, die Kanalverrundung im Gehäuse eines druckbeaufschlagten Bauteils beispielsweise eines Ventils
entsprechend der Zug-/Druckfestigkeitseigenschaften des Gehäusematerials sowie der im Betrieb auftretenden Spannungen im Gehäusematerial unter Ausbilden einer Asymmetrie im Rundungsverlauf anzupassen. Im Konkreten erhält die Verrundung der betreffenden nutenförmigen Kanalführung im Umfangsnutenquerschnitt und/oder entlang des Umfangs der Nut und/oder im Umfangsnutenlängsschnitt keinen grundsätzlich durchgehend gleichen und damit symmetrischen Radius btw. Nutenverlauf sondern die Verrundung ist an die analytisch/rechnerisch ermittelten Materialspannungen im Betrieb derart angepasst, um Spannungsspitzen in höherbelasteten Bereichen zu verringern und/oder auch zu erhöhen. Dadurch entsteht ggf. eine individuelle Asymmetrie im Umfangsnutenquerschnitt längs der betreffenden Umfangsnut (d.h. bezüglich der Nutenquerschnittsmittelachse) und/oder entlang des Umfangs der Nut und/oder im Nutenlängsschnitt, wodurch die maximale Materialbelastungsgrenze unter Betriebsbedingungen erhöht werden kann, wofür jedoch keine Vergrößerung der Außenmaße des Gehäuses erforderlich ist.

Vorteilhaft ist es, lediglich die druckbelasteten Kanalführungen in ausgewählter Weise mit asymmetrisch geformten Verrundungen auszubilden, da an diesen Stellen die größte Anpassungswirkung an die Zug-/Druckbelastung im Material erzielbar ist und dabei der Ermittlungs- und Fertigungsaufwand am geringsten bleibt.

Weiter vorteilhaft ist es, die Kanalverrundungen für jede Kanalführung individuell, vorzugsweise unterschiedlich zu gestalten. Alternativ ist es aber auch möglich (ggf. bei akzeptabler Verringerung des Anpassungseffekts) die Kanalverrundungen der einzelnen, vergleichbar belasteten Kanalführungen zu vergleichmäßigen, um hierdurch die Herstellungskosten zu verringern.

Ein Gehäuse eines mit einem hydraulischen/pneumatischen Druck beaufschlagbaren Bauteils hat gemäß einem ersten Aspekt der Erfindung zumindest eine druckbelastete Kanalführung, deren Kanalquerschnitt verrundet ist, wobei die Verrundung der zumindest einen druckbelasteten Kanalführung im Kanalquerschnitt und/oder im Kanallängsschnitt der druckbelasteten Kanalführung zumindest abschnittsweise asymmetrisch ausgebildet ist, wobei die Kanalverrundung im Kanalquerschnitt einer oder mehrerer ausgewählter
druckbelasteter Kanalführungen aus zumindest zwei unterschiedlichen Radien zusammengesetzt ist, und der kleinere Radius (r1) im Bereich von Druckspannungen und der größere Radius im Bereich von Zugspannungen ausgebildet ist.

Gemäß einem weiteren Aspekt der Erfindung ändert sich der Kanalquerschnitt in Kanallängsrichtung symmetrisch und/oder asymmetrisch.

Gemäß einem anderen Aspekt der Erfindung bleibt der Kanalquerschnitt über die gesamte Kanallänge gleich.

Gemäß einem weiteren Aspekt der Erfindung ist die Verrundung zumindest einer druckentlastenden Kanalführung im Kanalquerschnitt und/oder im Kanallängsschnitt der druckentlastenden Kanalführung zumindest abschnittsweise asymmetrisch ausgebildet.

Gemäß einem weiteren Aspekt der Erfindung ist das Gehäuse das eines Wege-Schieberventils mit einer Ventilbohrung zur verschiebbaren Aufnahme eines Ventilschiebers und einer Anzahl von die Kanalführungen ausbildenden Umfangsnuten in der Ventilbohrungswand, deren jeweiliger Querschnitt wahlweise die asymmerischen Verrundung aufweisen.

Gemäß einem weiteren Aspekt der Erfindung ist die Verrundung der Kanalführungen im Kanalquerschnitt wahlweise aus zwei oder mehreren unterschiedlichen Radien zusammengesetzt.

Die Erfindung wird nachstehend anhand eines bevorzugten Ausführungsbeispiels unter Bezugnahme auf die begleitenden Figuren näher erläutert.

Es zeigen:
Fig. 1 einen Teillängsschnitt durch das Gehäuse eines beispielsweise als Wege-Schieberventil ausgebildeten hydraulisch/pneumatisch belasteten Bauteils gemäß einem bevorzugten Ausführungsbeispiel der Erfindung und
Fig. 2 einen Teillängsschnitt durch das Gehäuse eines Wege-Schieberventils gleichen Aufbaus wie Fig. 1 jedoch gemäß einer konventionellen Bauart.

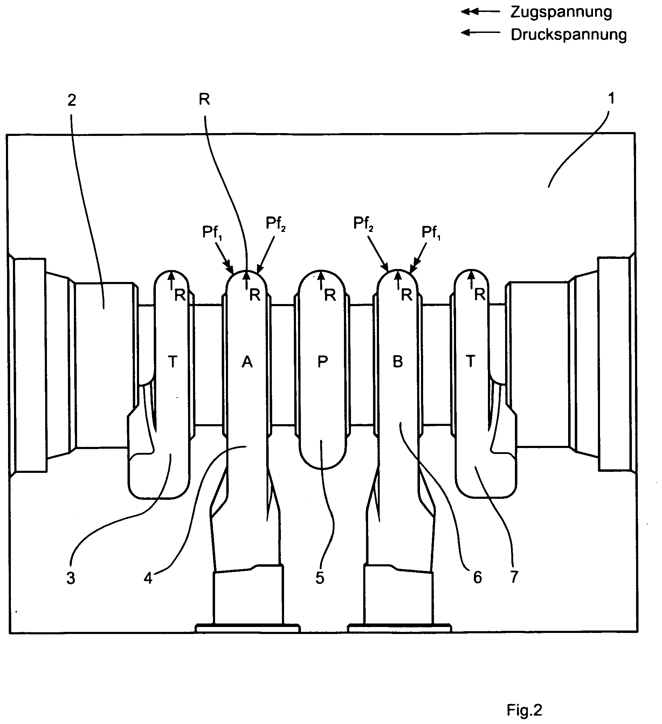

In der Fig. 2 ist ein Teil des Gehäuses 1 eines konventionellen Wege-Schieberventils als ein mögliches Beispiel für ein druckbeaufschlagbares Bauteil gezeigt, in welchem der Erfindungsgegenstand eingesetzt sein kann. Es ist natürlich auch möglich, die Erfindung beispielsweise in integrierten hydraulischen/pneumatischen Steuersystemen in Form von Steuerblöcken, Modulen etc. als druckbeaufschlagbare Bauteile anzuwenden.

Gemäß der Fig. 2 hat das lediglich beispielhaft gezeigte konventionelle Wege-Schieberventil das Gehäuse 1, in welchem eine längsverlaufende Ventilbohrung (Ventilkolbenkammer) 2 ausgeformt ist. Die Ventilbohrung 2 dient vorliegend zur verschiebbaren Aufnahme eines nicht weiter gezeigten Ventilkolbens oder Ventilschiebers, an welchem eine Anzahl von Steuerkanten ausgebildet ist.

In der Ventilbohrung 2 sind im Axialabstand zueinander Umfangsnuten 3 bis 7 ausgeformt, die über die Steuerkanten des nicht gezeigten Ventilkolbens in Abhängigkeit von dessen Axialposition geöffnet oder geschlossen (ggf. auch teilgeöffnet) sind. In die Umfangsnuten 3 bis 7 münden Gehäusebohrungen (Anschlussbohrungen) TA, A, P, B, TB, über die die Umfangsnuten 3 bis 7 mit einem hydraulischen/pneumatischen Druck beaufschlagbar oder entspannbar sind.

Im Einzelnen sind im vorliegenden Ausführungsbeispiel fünf Umfangsnuten 3 bis 7 längs der Ventilbohrung 2 in dieser ausgeformt, von denen die drei innen liegenden Umfangsnuten 4, 5, 6 jeweils mit druckbeaufschlagbaren Anschlüssen (Anschlussbohrungen) A, P, B verbunden sind und die beiden axial außen liegenden Umfangsnuten 3, 7 mit jeweils einem zu einem nicht weiter gezeigten Tank führenden Druckentlastungsanschluss (Tankanschlussbohrungen) TA, TB verbunden sind. Die beiden axial außen liegenden Umfangsnuten 3, 7 sind zudem über eine oben (oder unten) liegende Kanalbrücke 8 miteinander fluidverbunden. Die Umfangsnuten 3 bis 7 sind in dem aus dem Stand der Technik bekannten Vergleichsbauteil gemäß der Fig. 2 trogförmig, d.h. im Nutenquerschnitt (quer zur Umfangsrichtung) über den gesamten Umfang konstant halbkreisförmig ausgebildet mit einem vorbestimmten Radius = ½ Kanalbreite.

In konventionell (z.B. mit Dehnungsmessstreifen oder per Finite-Elemente-Progammen) ermittelten Spannungsdiagrammen läßt sich die Spannungsverteilung im Gehäusematerial während eines simulierten Betriebs des Wege-Schieberventils gemäß dem konventionellen Aufbau darstellen. Demzufolge ergeben sich infolge der bekannten Vollverrundungen der Umfangsnuten gemäß der Darstellung in der Fig. 2 prinzipiell die kleinstmöglichen Kerbwirkungen, wodurch die Spannungen im Gehäusematerial im vorliegenden Versuchsbeispiel in einer vorbestimmten (simulierten) Betriebssituation auf max. ca. 152 N/mm² begrenzt werden konnten. Die in der Fig. 2 mit dem Bezugszeichen Pf1 gekennzeichneten Pfeile, die im Verrundungsbereich der Umfangsnuten 4 und 6 eingezeichnet sind und im Wesentlichen auf die, zu den jeweiligen Entlastungsnuten 3, 7 hinweisenden Querschnittshälften der Umfangsnuten 4 und 6 hin ausgerichtet sind, zeigen dabei die Stellen mit hoher Zugspannung im Gehäusematerial an. Die in der Fig. 2 mit dem Bezugszeichen Pf2 gekennzeichneten Pfeile, die ebenfalls im Verrundungsbereich der Umfangsnuten 4 und 6 eingezeichnet sind, jedoch den Pfeilen PF1 bezüglich der Nutenquerschnittsmittelachse gegenüber liegen, zeigen die Stellen mit besonders hoher Druckspannung im Gehäusematerial an.

Aus dem beispielhaft simulierten Betrieb hat sich letztlich eine maximale hydraulische/pneumatische Druckfestigkeit des getesteten Vergleichs-Gehäuses gemäß der Fig. 2 von ca. 400 bar ergeben, die erfahrungsgemäß ausreichend ist, um statistisch (incl. Materialschwankungen) eine hydraulische/pneumatische Druckfestigkeit von ca. 300 bar zu gewährleisten.

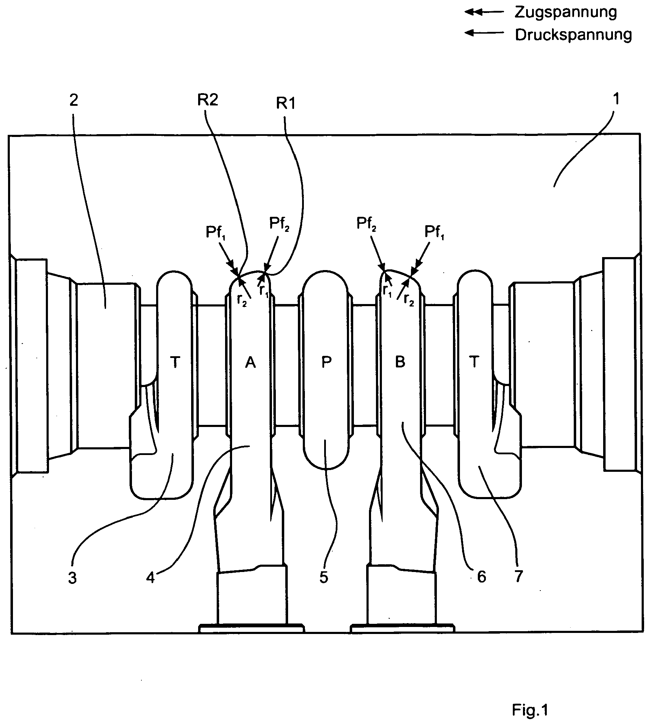

In der Fig. 1 ist nunmehr ebenfalls das Wege-Schieberventil gemäß der Fig. 2 dargestellt, jedoch mit einer erfindungsgemäßen Abwandlung der Umfangsnutenverrundungen. Alle weiteren technischen Ausgestaltungen des erfindungsgemäßen Wege-Schieberventils entsprechen dem vorstehend beschriebenen Vergleichsventil konventioneller Bauart. Es wird daher im Folgenden nur noch auf die erfindungsgemäße Abwandlung eingegangen.

Im Konkreten hat sich beim konventionellen Ventil gemäß der Fig. 2 im Fall einer gleichzeitigen Fluiddruckbelastung (pulsierend) in den drei innen liegenden Umfangsnuten 4, 5, 6 ein Gehäusebruch im Bereich der beiden zu den zwei Tankanschlüssen TA und TB unmittelbar benachbarten Umfangsnuten 4, 6 ergeben. Demzufolge erhielten diese zwei Umfangsnuten 4, 6 im vorliegenden erfindungsgemäßen Beispiel hinsichtlich ihrer Verrundungsform eine zum konventionellen Ventil unterschiedliche Querschnittsgeometrie.

In anderen Worten ausgedrückt, wurde beim konventionellen, wie auch beim erfindungsgemäßen Versuchsmodell entsprechend dem vorliegenden Ausführungsbeispiel als Gehäusematerial GG30 (aber auch GGG40 ist möglich) mit einer Zugfestigkeit von 300N/mm² und einer Druckfestigkeit von 960N/mm² verwendet. Daher ist bei diesem allgemein üblichen Material die DruckSchwellfestigkeit deutlich größer als die Zug-Schwellfestigkeit. Durch eine Verschiebung der Kanalverrundungen im Umfangsnutenquerschnitt längs der Ventilbohrungsachse, d.h. durch die Ausbildung der Kanalverrundung durch Anlegen zweier Kreisformsegmente mit unterschiedlichen Radien im Umfangsnutenquerschnitt (kleinerer Radius r1 im Bereich der zu erwartenden Druckspannungen im Gehäusematerial, größerer Radius r2 im Bereich der zu erwartenden Zugspannungen im Gehäusematerial) konnte die hydraulische/pneumatische Druckfestigkeit des Gehäuses insgesamt erhöht werden. Konkret wurde die Kanalverrundung im Umfangsnutenquerschnitt (d.h. quer zur Umfangsrichtung) gemäß der Fig. 1 für die Kanäle 3 und 6 (diese Umfangsnuten sind mit den druckbeaufschlagbaren Anschlüssen A und B fluidverbunden) deformiert, indem ein Querschnittsabschnitt des Kanals mit dem Radius r1 und der andere Querschnittsabschnitt des Kanals mit dem Radius r2 verrundet wurde. Hierdurch wurde der Kanalquerschnitt insgesamt so angepasst, dass sich die Zugspannungen im Gehäusematerial (durch Vergrößern des Nutenradiuses r2 an entsprechender Stelle, d.h auf der der Entlastungsnut 3, 7 jeweils zugewandten Nutenquerschnittshälfte) verringern und gleichzeitig die Druckspannung im Gehäusematerial (durch Verkleinern des Nutenradiuses r1 an entsprechender Stelle d.h auf der der Entlastungsnut 3, 7 jeweils abgewandten Nutenquerschnittshälfte) erhöhen ließen. Die "asymmetrischen" Eigenschaften des eingesetzten Gussmaterials (zulässige Druckspannung wesentlich höher als zulässige Zugspannung) wurden hierfür vorteilhaft ausgenutzt.

Im simulierten Betriebsversuch beim Bauteil gemäß der Fig. 1 (übereinstimmend zum vorstehend beschriebenen Betriebsversuch mit dem koventionellen Bauteil gemäß der Fig. 2) konnten hierdurch die Materialspannungen im erfindungsgemäß modifizierten Gehäuse gegenüber dem konventionellen Ventil um > 28% reduziert und damit die Druckfestigkeit im gleichen Maße erhöht werden.

Wie aus der Fig. 1 deutlich zu erkennen ist, ergibt sich bei der individuellen Querschnittsanpassung der jeweiligen Kanalverrundungen in den Umfangsnuten 4 und 6, die mit den druckbeaufschlagbaren Anschlüssen A und B verbunden sind, ein bezüglich der Nutenquerschnitts-Mittelachse asymmetrischer Nutenquerschnitt, wohingegen die Kanalverrundung zumindest der beiden Tankkanäle (Umfangsnuten) 3 und 7 und vorliegend auch des mittleren Kanals (Umfangsnut) 5, der mit dem Druckanschluss P fluidverbunden ist, symmetrisch verbleiben.

Abschließend sei darauf verwiesen, dass die individuelle Verrundung der Nutenquerschnitte auf der Grundlage von Modellen berechnet oder analytisch im Versuch ermittelt werden können. Auch muss sich bei der individuellen Adaption der Kanalverrundung an die tatsächlich auftretenden Materialspannungen unter Berücksichtigung der unterschiedlichen Druck-/Zugbelastbarkeit des verwendeten Gehäusematerial nicht zwangsläufig eine Asymmetrie im Nutenquerschnitt auftreten, wie dies im vorliegenden Beispiel der Kanal 5 zeigt. Stattdessen oder zusätzlich ist es nämlich auch denkbar, dass sich der Kanalquerschnitt nicht (nur) in Kanalquerrichtung sondern in Umfangsrichtung der Umfangsnut symmetrisch und/oder asymmetrisch ändert. Ferner ist es praktisch möglich, dass auch die beiden äußeren Umfangsnuten 3 und 7, welche mit den Tankanschlüssen TA, TB fluidverbunden sind, und/oder die mittig angeordnete Umfangsnut 5 jeweils eine im Nutenquerschnitt asymmetrische Kanalverrundung mit bezüglich der Nutenquerschnitts-Mittelachse zwei unterschiedlichen Radien aufweisen.

Auch kann die Anpassung der Rundungsverläufe bzw. Asymmetrien an die vorherrschenden Spannungsverläufe im Gehäusematerial dazu führen, dass die Kanalverrundungen nicht nur im Umfangsnutenquerschnitt sondern auch oder alternativ bezüglich der Längsachse der Ventilbohrung, bzw. entlang der Umfangsrichtung der jeweiligen Umfangsnut (im Nutenlängsschnitt) asymmetrisch ausgeführt sind. Schliesslich müssen die unterschiedlichen Radien r1, r2 für die Kanäle 4 und 6 gemäß dem vorliegenden Ausführungsbispiel nicht notwendiger Weise gleich sein sondern können für jeden Kanal unterschiedliche Werte annehmen.

### Bezugszeichenliste

- 1: Gehäuse
- 2: Ventilkolbenkammer
- 3 bis 7: Umfangsnuten
- 8: Kanalbrücke
- A, P, B: Druckanschlüsse
- TA, TB: Tankanschlüsse
- r1, r2: Radien der Kanalverrundung
- Pf1, Pf2: Materialspannungspfeile

## Patentansprüche

1. Verfahren zur Erhöhung der hydraulischen oder pneumatischen Belastbarkeit eines Bauteilgehäuses (1) mit druckbelasteter Kanalführung (4, 5, 6), deren Kanalquerschnittsprofil in Kanallängsrichtung verrundet werden, **dadurch gekennzeichnet, dass**
- betriebsbedingte Materialspannungen längs der Kanalführungen (4, 5, 6) analytisch und/oder rechnerisch ermittelt werden,
- die Kanalverrundungen wahlweise so angepasst werden, dass sich die ermittelten Zugspannungen im Material verringern bei gleichzeitiger Erhöhung der ermittelten Druckspannungen,
- die Kanalverrundung im Kanalquerschnitt einer oder mehrerer ausgewählter druckbelasteter Kanalführungen (4, 5, 6) aus zumindest zwei unterschiedlichen Radien (r1, r2) zusammengesetzt wird, und
- der kleinere Radius (r1) im Bereich der ermittelten Druckspannungen und der größere Radius (r2) im Bereich der ermittelten Zugspannungen ausgebildet wird.

2. Verfahren nach Anspruch 1, **dadurch gekennzeichnet, dass** die Kanalverrundungen ausgewählter druckbelasteter Kanalführungen (4, 5, 6) im Kanallängsschnitt asymmetrisch ausgeformt werden.

3. Verfahren nach Anspruch 1 oder 2, **dadurch gekennzeichnet, dass** die Kanalverrundungen ausgewählter druckentlastender Kanalführungen (2, 7) im Kanalquerschnitt und/oder im Kanallängsschnitt asymmetrisch ausgeformt werden.

## Claims

1. Method for increasing the hydraulic or pneumatic loadability of a component housing (1) having a pressure-loaded channel guide (4, 5, 6) whose channel cross-sectional profile are rounded in the channel longitudinal direction, **characterized in that**
- operation-related material stresses along the channel guides (4, 5, 6) are determined analytically and/or computationally,
- the channel roundings are selectively adapted such that the determined tensile stresses in the material are reduced with a simultaneous increase in the determined compressive stresses,
- the channel rounding in the channel cross section of one or more selected pressure-loaded channel guides (4, 5, 6) is composed of at least two different radii (r1, r2) and
- the smaller radius (r1) is formed in the region of the determined compressive stresses and the larger radius (r2) is formed in the region of the determined tensile stresses.

2. Method according to Claim 1, **characterized in that** the channel roundings of selected pressure-loaded channel guides (4, 5, 6) are formed asymmetrically in the channel longitudinal section.

3. Method according to Claim 1 or 2, **characterized in that** the channel roundings of selected pressure-relieving channel guides (2, 7) are formed asymmetrically in the channel cross section and/or in the channel longitudinal section.

## Revendications

1. Procédé pour augmenter la résistance hydraulique ou pneumatique d'un boîtier de composant (1) avec un passage de conduit (4, 5, 6) sollicité en pression, dont le profil de conduit en section transversale sont arrondi dans la direction longitudinale du conduit, **caractérisé en ce que**
- des contraintes de matériau dues au fonctionnement le long des passages de conduit (4, 5, 6) sont déterminées analytiquement et/ou par calcul,
- les arrondis de conduit sont adaptés de manière sélective de telle sorte que les contraintes de traction déterminées dans le matériau diminuent en fonction d'une augmentation simultanée des contraintes de pression déterminées,
- l'arrondi de conduit dans la section transversale du conduit d'un ou plusieurs passages de conduit (4, 5, 6) sélectionnés sollicités en pression est constitué d'au moins deux rayons différents (r1, r2), et
- le plus petit rayon (r1) est réalisé dans la région des contraintes de pression déterminées et le plus grand rayon (r2) est réalisé dans la région des contraintes de traction déterminées.

2. Procédé selon la revendication 1, **caractérisé en ce que** les arrondis de conduit de passages de conduit (4, 5, 6) sélectionnés sollicités en pression sont formés de manière asymétrique en coupe longitudinale à travers le conduit.

3. Procédé selon la revendication 1 ou 2, **caractérisé en ce que** les arrondis de conduit de passages de conduits (2, 7) sélectionnés déchargés en pression sont formés de manière asymétrique en coupe transversale à travers le conduit et/ou en coupe longitudinale à travers le conduit.
